# EUROPÄISCHE PATENTANMELDUNG

(11) **EP 2 505 517 A1**
(43) Veröffentlichungstag der Anmeldung: **03.10.2012**
(21) Anmeldenummer: 12000495.7
(22) Anmeldetag: 26.01.2012
(51) Int. Cl.: B65D 90/34, F17C 13/12

(54) **Vorrichtung zum sicheren Abführen von Medien**

(30) Priorität: 29.03.2011 DE 102011015431
(71) Anmelder: Linde Aktiengesellschaft, 80331 München (DE)
(72) Erfinder: Bohn, Matthias, 15370 Petershagen (DE)
(74) Vertreter: Zahn, Christoph

(57) **Zusammenfassung**

Es wird eine Vorrichtung zum Abführen eines gasförmigen Mediums beschrieben.

Diese weist eine Abführleitung (1), in der ein Sicherheitsventil (2) und ein dem Sicherheitsventil (2) nachgeschalteter Gasstrahl-Verdichter (3) angeordnet sind, auf. Des Weiteren ist dem Gasstrahl-Verdichter (3) vorzugsweise wenigstens ein Speicherbehälter (S) zugeordnet.

## Beschreibung

Die Erfindung betrifft eine Vorrichtung zum Abführen eines gasförmigen Mediums.

Bei einer Vielzahl von verfahrenstechnischen Prozessen sowie bei der Speicherung von technischen Gasen und Gasgemischen, wie beispielsweise Wasserstoff oder Methan, ist es erforderlich, (gasförmige) Medien, die brennbar, leicht entzündlich und/oder toxisch sind, sicher an die Atmosphäre abzugeben bzw. abzublasen. Sofern diese Medien unter erhöhtem Druck vorliegen, sind üblicherweise Sicherheitsventile vorgesehen, die im Gefahrenfall - also dann, wenn der Druck innerhalb des Systems einen vorgegebenen Schwellenwert überschreitet - öffnen, so dass das Medium abgeführt und das System vor Beschädigungen durch Bersten geschützt werfen kann.

Dieses Abführen bzw. Abblasen von gefährlichen Medien in die Atmosphäre ist jedoch unter Umständen mit einer erneuten Gefährdung verbunden, da brennbare Gase, wie beispielsweise Methan, durch Vermischen mit Luft ein explosives Gemisch bilden können, das im Falle einer zufälligen Entzündung große Schäden verursachen kann. Auch beim Austritt von toxischen Medien kann, sofern eine nicht ausreichende Verdünnung erreicht wird, eine Gefährdung, insbesondere von Personen, in der näheren Umgebung auftreten.

Aufgabe der vorliegenden Erfindung ist es, eine Vorrichtung zum Abführen eines gasförmigen Mediums anzugeben, die die vorgenannten Nachteile vermeidet und insbesondere das sichere Abführen bzw. Abblasen von gefährlichen Medien ermöglicht.

Zur Lösung dieser Aufgabe wird eine Vorrichtung zum Abführen eines gasförmigen Mediums vorgeschlagen, die eine Abführleitung aufweist, in der ein Sicherheitsventil und ein dem Sicherheitsventil nachgeschalteter Gasstrahl-Verdichter angeordnet sind.

Die erfindungsgemäße Vorrichtung weiterbildend wird vorgeschlagen, dass dem Gasstrahl-Verdichter wenigstens ein Speicherbehälter zugeordnet ist.

Entsprechend einer weiteren vorteilhaften Ausgestaltung der erfindungsgemäßen Vorrichtung ist dem Gasstrahl-Verdichter saugseitig eine Druck-Messvorrichtung zugeordnet.

Kern der vorliegenden Erfindung ist es, ein Sicherheitsventil mit einem Gasstrahl-Verdichter derart zu kombinieren, dass dieser, sobald das Sicherheitsventil anspricht, mit dem abzuführenden Medium beaufschlagt wird. Das abzuführende Medium fungiert somit im Gasstrahl-Verdichter als Treibmedium. Da dieses unter Druck steht, wird aufgrund der hohen Abströmgeschwindigkeit in dem Gasstrahl-Verdichter auf der Saugseite seiner Injektordüse ein Unterdruck erzeugt. Im Unterdruckbereich dieser Düse befinden sich üblicherweise mehrere Ansaugöffnungen, beispielsweise in Form eines Ringspaltes. Über diese Ansaugöffnungen kann nunmehr entweder Luft aus der Atmosphäre oder ein zweites Medium, das nicht mit dem abzuführenden Medium identisch ist, angesaugt werden.

Luft aus der Atmosphäre kann im Regelfall nur dann angesaugt werden, wenn die Vermischung von Luft und abzuführendem Medium nicht zur Bildung eines kritischen bzw. gefährlichen Gasgemisches führt. Die Zuführung eines zweiten Mediums ist immer dann erforderlich, wenn ein sicheres Abführen des ersten Mediums erst nach einem Vermischen bzw. Verdünnen mit einem zweiten, vorzugsweise inert wirkenden Medium möglich ist. Um beispielsweise ein sicheres Abführen von Methan realisieren zu können, kann als zweites Medium Stickstoff verwendet werden. Bei einer entsprechenden Zumischung von Stickstoff zu Methan kann die Zündgrenze des entstehenden Methan-Stickstoff-Gemisches soweit herabgesetzt werden, dass eine Zündung wirkungsvoll verhindert werden kann und somit die Abgabe des Methans bzw. Methan-Stickstoff-Gemisches an die Atmosphäre problemlos möglich ist.

Gleiches gilt für abzuführende toxische Medien, die durch die Beimischung eines geeigneten zweiten Mediums soweit verdünnt werden, dass eine Gefährdung ausgeschlossen werden kann. Auch kann ihnen ein zweites Medium beigemischt werden, das zu einer gezielten neutralisierenden Reaktion zwischen dem toxischen Medium und dem zweiten Medium führt, so dass ebenfalls eine Gefährdung beim Abblasen des toxischen Mediums vermieden wird.

Aufgrund der hohen Abströmgeschwindigkeit des abzuführenden Mediums innerhalb des Gasstrahl-Verdichters wird unterdruckseitig eine vergleichsweise hohe Ansaugleistung von Atmosphärenluft bzw. des zweiten Mediums erreicht. Daraus resultiert eine ausreichend hohe Verdünnung des abzuführenden kritischen Mediums.

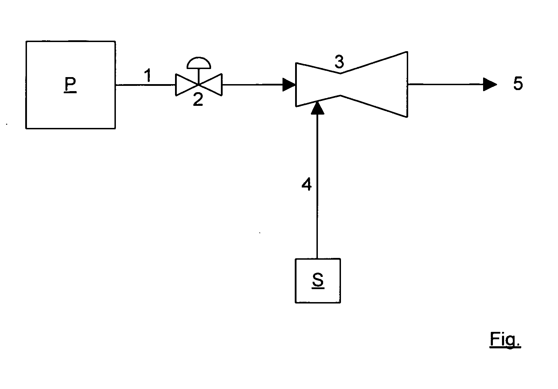

Die erfindungsgemäße Vorrichtung zum Abführen eines gasförmigen Mediums sowie weitere vorteilhafte Ausgestaltungen derselben seien nachfolgend anhand des in der Figur dargestellten Ausführungsbeispiels näher erläutert.

Über eine Abführleitung 1 wird aus einem (verfahrenstechnischen) Prozess P oder aus einem Speicherbehälter ein unter Druck stehendes Medium bzw. Gas abgezogen und nach Ansprechen des Sicherheitsventils 2 über den dem Sicherheitsventil 2 nachgeschalteten Gasstrahl-Verdichter 3 an die Atmosphäre 5 abgegeben. Über Leitung 4 wird die Unterdruckseite des Gasstrahl-Verdichters 3 mit Atmosphärenluft oder einem zweiten Medium versorgt. Hierbei kann das zweite Medium beispielsweise aus einem dem Gasstrahl-Verdichter 3 zugeordneten Speicherbehälter S entnommen werden.

Oftmals tritt das Problem auf, dass das Sicherheitsventil 2 undicht wird bzw. nicht mehr dicht schließt. Dies hat ein permanentes und ggf. ungewolltes Abströmen des Mediums bzw. Gases aus dem Prozess P oder dem Speicherbehälter zur Folge. Um dies zu vermeiden, kann auf der Saugseite des Ejektors bzw. Gasstrahl-Verdichters 3 eine Messvorrichtung vorgesehen werden, mittels derer ein Unterdruck gemessen werden kann. Dieser stellt einen Indikator für die Undichtigkeit des Sicherheitsventils 2 dar.

Die erfindungsgemäße Vorrichtung zum Abführen eines gasförmigen Mediums führt zu einer signifikanten Erhöhung der Sicherheit im Falle des Abführens bzw. Abblasens von kritischen Medien über Sicherheitsventile. Die erfindungsgemäße Vorrichtung erfordert keine zusätzliche Energieversorgung sowie Mess- oder Regeleinrichtungen.

## Patentansprüche

1. Vorrichtung zum Abführen eines gasförmigen Mediums, aufweisend eine Abführleitung (1), in der ein Sicherheitsventil (2) und ein dem Sicherheitsventil (2) nachgesc.h.alteter Gasstrah!-Verdichter (3) angeordnet sind.

2. Vorrichtung nach Anspruch 1, **dadurch gekennzeichnet, dass** dem Gasstrahl-Verdichter (3) wenigstens ein Speicherbehälter (S) zugeordnet ist.

3. Vorrichtung nach Anspruch 1 oder 2, **dadurch gekennzeichnet, dass** dem Gasstrahl-Verdichter (3) saugseitig eine Druck-Messvorrichtung zugeordnet ist.
